(19) Europäisches Patentamt

European Patent Office

Office européen des brevets

(11) **EP 1 141 786 B1**

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(21) Anmeldenummer: **99964643.3**

(22) Anmeldetag: **21.12.1999**

(51) Int Cl.⁷: **G03G 15/00**, H04N 1/40

(86) Internationale Anmeldenummer:
**PCT/EP1999/010246**

(87) Internationale Veröffentlichungsnummer:
**WO 2000/038019 (29.06.2000 Gazette 2000/26)**

(54) **VERFAHREN ZUM VERBESSERTEN ELEKTROGRAFISCHEN DRUCK VON BILDDETAILS SOWIE NACH DIESEM VERFAHREN ARBEITENDES DRUCKGERÄT**

METHOD FOR THE IMPROVED ELECTROGRAPHIC PRINTING OF IMAGE DETAILS AND PRINTING DEVICE WHICH OPERATES ACCORDING TO THIS METHOD

PROCEDE POUR L'IMPRESSION ELECTROGRAPHIQUE AMELIOREE DE DETAILS D'IMAGE, ET DISPOSITIF D'IMPRESSION FONCTIONNANT SELON CE PROCEDE

(84) Benannte Vertragsstaaten:
**BE DE FR GB**

(30) Priorität: **21.12.1998 DE 19859093**

(43) Veröffentlichungstag der Anmeldung:
**10.10.2001 Patentblatt 2001/41**

(73) Patentinhaber: **OCE Printing Systems GmbH 85586 Poing (DE)**

(72) Erfinder:
• **MAESS, Volkhard**
  **D-85435 Erding (DE)**
• **SCHLEUSENER, Martin**
  **D-85604 Zorneding (DE)**

(74) Vertreter: **Schaumburg, Thoenes & Thurn Postfach 86 07 48 81634 München (DE)**

(56) Entgegenhaltungen:
WO-A-97/37285          US-A- 4 709 250
US-A- 5 153 609         US-A- 5 767 888

EP 1 141 786 B1

**Beschreibung**

Die Erfindung betrifft ein Verfahren zum Betreiben eines elektrofotografischen Druck- oder Kopiergeräts. Außerdem betrifft die Erfindung einen Drucker bzw. Kopierer zum Durchführen des Verfahrens. Dieser Drucker wird weiter unten erläutert. Bekannt sind Verfahren, bei denen ein aufgeladener Fotoleiterbereich mit einer vorgegebenen Belichtungsenergie durch eine Belichtungsvorrichtung belichtet wird. Das elektrische Potential auf dem Fotoleiterbereich wird nach dem Belichten erfaßt. An Hand einer Näherung für die aktuelle Kennlinie des Fotoleiters wird unter Berücksichtigung des erfaßten Potentials für den Druckvorgang eine angepaßte Belichtungsenergie ermittelt, die dem Einfluß von Abweichungen der aktuellen Kennlinie des Fotoleiters von einer Sollkennlinie auf den Druckvorgang entgegenwirkt.

Die Kennlinie des Fotoleiters weicht von der Sollkennlinie beispielsweise aufgrund von Temperaturveränderungen, Abnutzung oder Alterung des Fotoleiters ab. Außerdem gibt es beim Auswechseln des Fotoleiters in den Kennlinien auf Produktionstoleranzen zurückzuführende Abweichungen.

Ein Verfahren zum Ermitteln der Belichtungsenergie wird in der WO 97/37285 erläutert. Die bekannte Art der Belichtungsregelung läßt nur einen Ausgleich bzw. eine Abschwächung der Wirkungen der abweichenden Kennlinie im Hinblick auf weiße bzw. schwarze Vollflächen zu. Die Qualität feinerer Bilddetails wird nicht zielgerichtet beeinflußt.

Aus der DE 195 09 852 C2 ist ein Verfahren zur Steuerung der Bildqualität bekannt, bei dem die Qualität feiner Bilddetails in vorgegebenen Standardmustern mit Hilfe eines optischen Sensors oder eines Potentialsensors erfaßt und anschließend durch Veränderung von Parametern des Druckvorgangs gesteuert wird. Der Sensor muß dabei die Druckqualität einzelner Bildelemente erfassen. Die Art der Steuerung der Parameter wird nur allgemein angegeben.

Aus der US-A-4,709,250 ist es bekannt, ein Testbild mithilfe von Impulsen festzulegen, mit denen ein Zeichengenerator angesteuert wird. Dieses Testbild ist nicht als Rasterbild aufgebaut, das belichtete Bildelemente und nicht belichtete Bildelemente enthält; vielmehr wird eine komplett belichtete Fläche erzeugt, wobei alle Bildpunkte gleichartig belichtet werden. Über diese gesamte belichtete Fläche wird das elektrische Potential des Fotoleiters ermittelt und die Belichtungsenergie für einen bestimmten Halbtonwert festgelegt. Diese Festlegung gilt dann für alle Bildpunkte gleichermaßen.

Es ist Aufgabe der Erfindung ein Verfahren zum Betreiben eines elektrofotografischen Druckgeräts anzugeben, bei dem große Flächen und auch feine Details im Druckbild auch bei veränderter Kennlinie des Fotoleiters mit hoher Druckqualität gedruckt werden können. Weiterhin ist es Aufgabe der Erfindung, ein Druck- bzw. Kopiergerät anzugeben, das auch bei veränderter Kennlinie des Fotoleiters große Flächen und feine Details mit hoher Druckqualität drückt.

Diese Aufgabe wird durch ein Verfahren mit den im Patentanspruch 1 angegebenen Verfahrensschritten gelöst. Weiterbildungen dieses Verfahrens sind in den auf Anspruch 1 rückbezogenen abhängigen Ansprüchen angegeben.

Das erfindungsgemäße Verfahren geht von der Erkenntnis aus, daß Veränderungen im Entladeverhalten des Fotoleiters zu Veränderungen des elektrischen Feldes oberhalb des Fotoleiters führen. Das Feld oberhalb des Fotoleiters zieht die Tonerteilchen an und beeinflußt damit die Bildentwicklung. Auf Fotoleiterflächen, die größeren weißen bzw. schwarzen Bildflächen entsprechen, herrscht eine etwa konstante Feldstärke, die nur durch die Potentialdifferenz zwischen der Fotoleiteroberfläche und der Entwicklerstation bestimmt ist. Auf Fotoleiterflächen, die feinen Bildelementen entsprechen, beispielsweise dünnen Linien, Einzel- und Rasterpunkten, ist das elektrische Feld außer von der genannten Potentialdifferenz in komplizierter Weise von der geometrischen Form der Details und von den physikalischen Eigenschaften des Fotoleiters abhängig. Das bedeutet, daß sich Veränderungen der Fotoleitereigenschaften in unterschiedlicher Weise auf die Einfärbung großer Flächen und feiner Bilddetails auswirken.

Beim erfindungsgemäßen Verfahren wird nur ein erster Teil der Bildelemente eines aufgeladenen Fotoleiterbereiches mit einer vorgegebenen Belichtungsenergie belichtet. Der andere Teil der Bildelemente des zur Bestimmung der angepaßten Belichtungsenergie verwendeten Fotoleiterbereiches wird nicht bzw. mit einer wesentlich geringeren Belichtungsenergie belichtet. Das Verhältnis der Anzahl der Bildelemente des ersten Teils zur Anzahl der Bildelemente des zweiten Teils definiert einen Rasterparameter. Dieser Rasterparameter wird beim Ermitteln der angepaßten Belichtungsenergie verwendet. Die hohe Druckqualität großer Flächen und feiner Bilddetails wird beim erfindungsgemäßen Verfahren bei unterschiedlichen Fotoleiterkennlinien dadurch erreicht, daß das Potentialprofil eines Bilddetails durch Veränderung der Belichtung an eine Zielform angeglichen wird. Das Erfassen des Potentials einzelner Bildpunkte wird jedoch vermieden, weil beim erfindungsgemäßen Verfahren ein Bereich aus mehreren Bildelementen, nämlich aus den Bildelementen beider Teile, zur Potentialmessung mit Hilfe eines über die Fläche integrierenden Sensors verwendet wird. Die Potentialmessung erfolgt bei einem hinreichend groß gewählten Bereich von beispielsweise 25 mm$^2$ einfach und genau.

In einer Weiterbildung des erfindungsgemäßen Verfahrens sind die Bildelemente des ersten Teils und auch die Bildelemente des anderen, zweiten Teils auf dem Fotoleiterbereich etwa gleichmäßig verteilt, beispielsweise schachbrettartig oder streifenförmig. Durch diese Anordnung der Bildelemente wird bei der Potentialmessung eine mittlere Feldstärke erfaßt, die sich sehr gut zum Ermitteln der angepaßten Belichtungsenergie eignet. Auf dem Fotoleiterbereich entsteht eine gleichmäßige Potentialverteilung, so daß geringe Positionsabweichungen des Potentialsensors auf das Meßergebnis keinen Einfluß haben.

In einer nächsten Weiterbildung wird zum Belichten ein Multilevel-Zeichengenerator verwendet, wie er z.B. in der US-Patentschrift 5,767,888 beschrieben ist. Der Multilevel-Zeichengenerator wird entweder wie in der genannten US-Patentschrift mit Hilfe einer LED-Zeile realisiert oder durch Verwenden eines Mehrebenenlasers, der den Fotoleiter abtastet.

Die Erfindung betrifft außerdem einen Drucker zum Ausführen des erfindungsgemäßen Verfahrens. Somit gelten die oben genannten technischen Wirkungen auch für den erfindungsgemäßen Drucker.

Im folgenden werden Ausführungsbeispiele der Erfindung an Hand der beiliegenden Zeichnungen erläutert. Darin zeigen:

Figur 1             ein Potential-Zeit-Diagramm unterschiedlicher Kennlinien eines Fotoleiters,

Figuren 2a bis 2c   Diagramme zur Verdeutlichung des Einflusses unterschiedlicher Kennlinien des Fotoleiters auf den Entwicklungsvorgang,

Figur 3             ein Potential-Belichtungsenergie-Diagramm mit einem Zielbereich zum Ermitteln einer angepaßten Belichtungsenergie,

Figur 4             ein Ablaufdiagramm der beim Ermitteln der angepaßten Belichtungsenergie auszuführenden Verfahrensschritte, und

Figur 5             beim Bestimmen der angepaßten Belichtungsenergie verwendete Formeln, und

Figur 6             eine Prinzipdarstellung eines Druckgeräts.

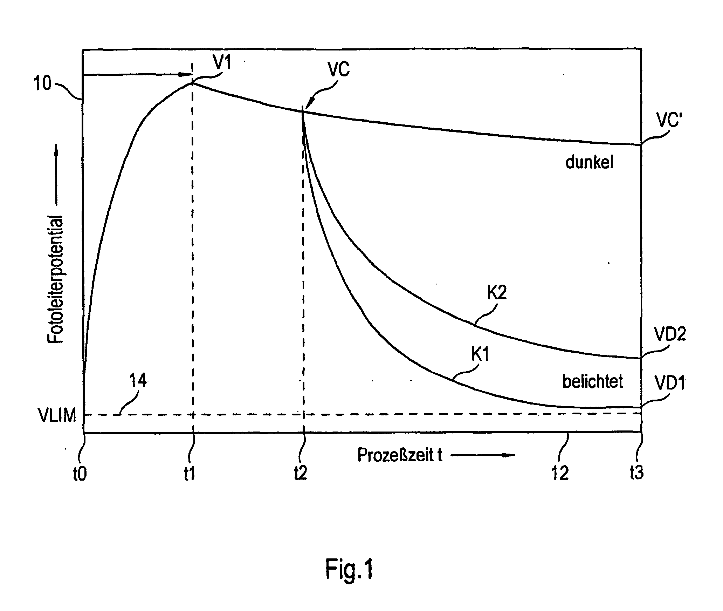

Figur 1 zeigt ein Potential-Zeit-Diagramm zweier Kennlinien K1 und K2 eines Fotoleiters. Auf der Ordinate 10 ist das Potential und auf der Abszisse 12 die Zeit t dargestellt. Zu einem Zeitpunkt t0 wird mit dem Aufladen des Fotoleiters begonnen. Das Potential auf dem Fotoleiter hat zu einem Zeitpunkt t1 sein größtes Aufladepotential V1. Während der zwischen dem Zeitpunkt t1 und einem Zeitpunkt t2 liegenden Zeit nimmt die Ladung auf dem Fotoleiter aufgrund von Umgebungseinflüssen bis auf ein Aufladepotential VC ab, welches etwas kleiner als das Aufladepotential V1 ist. Ab dem Zeitpunkt t2 wird der Fotoleiter belichtet. Die Belichtung hat zur Folge, daß das Potential auf dem Fotoleiter vom Aufladepotential VC gemäß Kennlinie K1 bis zu einem Zeitpunkt t3 auf ein Entladepotential VD1 exponentiell sinkt. Hat der Fotoleiter z.B. aufgrund einer verringerten Umgebungstemperatur die Kennlinie K2, so sinkt das Potential auf dem Fotoleiter zwischen den Zeitpunkten t2 und t3 exponentiell vom Aufladepotential VC auf ein Entladepotential VD2, welches oberhalb des Potentials VD1 liegt. Wird der Fotoleiter nicht belichtet, so hat er zum Zeitpunkt t3 auf seiner Oberfläche ein Aufladepotential VC', das etwas geringer als das Aufladepotential VC ist.

Auf dem Fotoleiter sind nach dem Belichten zum Zeitpunkt t3 abhängig von den Kennlinien K1 oder K2 unterschiedliche Entladepotentiale VD1 bzw. VD2 für den Entwicklungsbeginn vorhanden. Der unterschiedliche Verlauf der Kennlinien K1 und K2 eines Fotoleiters hängt beispielsweise auch vom Alter des Fotoleiters ab. Die Abweichung der Kennlinien K1 und K2 tritt jedoch auch bei einem Wechsel des Fotoleiters bzw. beim Vergleich der Fotoleiter zweier verschiedener Drucker auf. In diesem Fall haben fertigungsbedingte Schwankungen sowie die Qualität der Fotoleiter einen zusätzlichen Einfluß auf die Abweichung der Kennlinien K1 und K2 voneinander.

Die Kennlinie K2 gehört zu einem Fotoleiter der relativ lichtunempfindlich ist. Dagegen beschreibt die Kennlinie K1 einen Fotoleiter, der lichtempfindlicher als der durch die Kennlinie K2 beschriebene Fotoleiter ist. Ein Fotoleiter wird beispielsweise mit zunehmender Erwärmung lichtempfindlicher.

Die unterschiedlichen Entladepotentiale VD1 und VD2 führen zu unterschiedlichen Druckqualitäten, falls der Einfluß der Kennlinien K1 bzw. K2 auf den Druckvorgang nicht berücksichtigt wird. Eine gestrichelte Linie 14 verdeutlicht das tiefste auftretende Entladepotential VLIM der Fotoleiter mit den Kennlinien K1 bzw. K2.

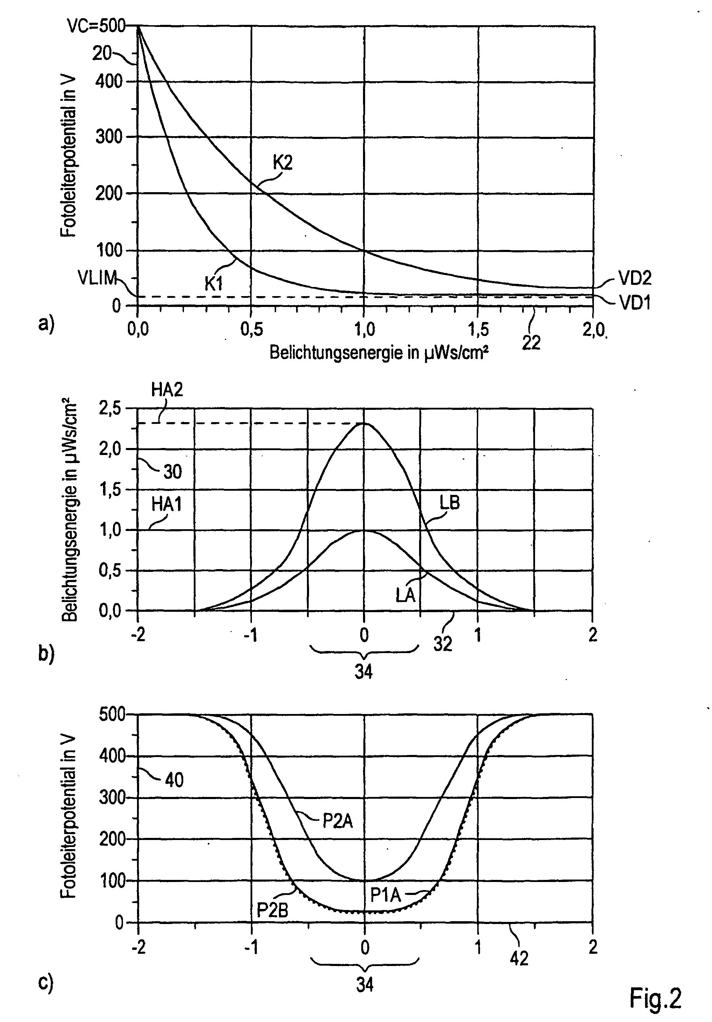

Die Figuren 2a bis 2c zeigen Diagramme zur Verdeutlichung des Einflusses der Kennlinien K1 und K2 auf den Entwicklungsvorgang. Fig. 2a zeigt ein Potential-Belichtungsenergie-Diagramm für die Kennlinien K1 und K2. Auf der Ordinate 20 ist das Potential auf den Fotoleitern in V (Volt) dargestellt. Auf der Abszisse 22 ist die Belichtungsenergie in $\mu Ws/cm^2$ dargestellt. Das Potential auf den Fotoleitern mit den Kennlinien K1 bzw. K2 sinkt von einem Potential 500 Volt gemäß fallender Exponentialfunktionen auf die Entladepotentiale VD1 bzw. VD2 bei einer Belichtungsenergie von 2,0 $\mu Ws/cm^2$.

Figur 2b zeigt ein Belichtungsenergie-Orts-Diagramm, bei dem die Belichtungsenergie in $\mu Ws/cm^2$ auf der Ordinate 30 und auf der Abszisse 32 der Abstand in Pixeln zu einem Bezugspixel 34 dargestellt sind. Eine Lichtverteilung LA wird von einer nicht dargestellten LED (Light Emitting Diode) ausgestrahlt, um das Bezugspixel 34 an der Bezugsposition 0 zu belichten. Die Lichtverteilung LA hat die Form einer Gaußschen Glocke, deren Randbereiche benachbarte Pixel des Bezugspixels 34 überdecken.

Eine Lichtverteilung LB wird erzeugt, um das Bezugspixel 34 mit einer höheren Belichtungsenergie im Vergleich zur Belichtungsenergie der Lichtverteilung LA zu belichten. Die Lichtverteilung LB ist ebenfalls gaußglockenförmig. Die Belichtungsenergie HA2 im Zentrum des Bezugspixels 34 ist bei der Lichtverteilung LB mehr als doppelt so hoch wie eine Belichtungsenergie HA1 im Zentrum des Bezugspixels 34 bei der Lichtverteilung LA, nämlich etwa 2,3 $\mu Ws/cm^2$ im Vergleich zu 1 $\mu Ws/cm^2$.

Figur 2c zeigt ein Potential-Orts-Diagramm, bei dem auf der Ordinate 40 das Potential auf der Oberfläche des Fotoleiters in Volt und auf der Abszisse 42 der Abstand zum Bezugspixel 34 dargestellt sind. Eine muldenartige Potentialverteilung P1A mit gaußglockenförmiger Form entsteht im Bereich des Bezugspixels 34, wenn der Fotoleiter die Kennlinie K1 hat und mit der Lichtverteilung LA belichtet wird. Die Potentialverteilung P1A führt zu einem Druckbild hoher Qualität. Hat der Fotoleiter dagegen die Kennlinie K2, so entsteht bei einer Belichtung gemäß der Lichtverteilung LA eine Potentialverteilung P2A im Bereich des Bezugspixels 34. Die Potentialverteilung P2A ist ähnlich wie die Potentialverteilung P1A, hat jedoch einen um etwa 80 Volt oberhalb des Minimalwerts der Potentialverteilung P1A liegenden Minimalwert. Durch diese Abweichung der Potentialverteilung P2A im Vergleich zur Potentialverteilung P1A würde sich ein Druckbild mit schlechter Qualität ergeben. Dies wird dadurch verhindert, daß beim Vorliegen der Kennlinie K2 die Lichtverteilung LB zur Belichtung des Bezugspixels 34 verwendet wird, wobei eine Potentialverteilung P2B entsteht, die durch eine punktierte Kurve dargestellt ist. Die Potentialverteilung P2B stimmt im wesentlichen mit der Potentialverteilung P1A überein. Somit hat das Druckbild auch bei Verwenden eines Fotoleiters mit der Kennlinie K2 eine unverändert gute Druckqualität. Die Belichtungsenergie HA2 in der Lichtverteilung LB wird deshalb als angepaßte Belichtungsenergie HA2 bezeichnet.

Besonders beim Verwenden eines Multilevel-Zeichengenerators, wie er in der US-Patentschrift 5,767,888 erläutert wird, ist es wichtig, eine vorgegebene Potentialverteilung zu erreichen, damit die Druckqualität hoch ist, insbesondere bei gerasteter Halbtondarstellung.

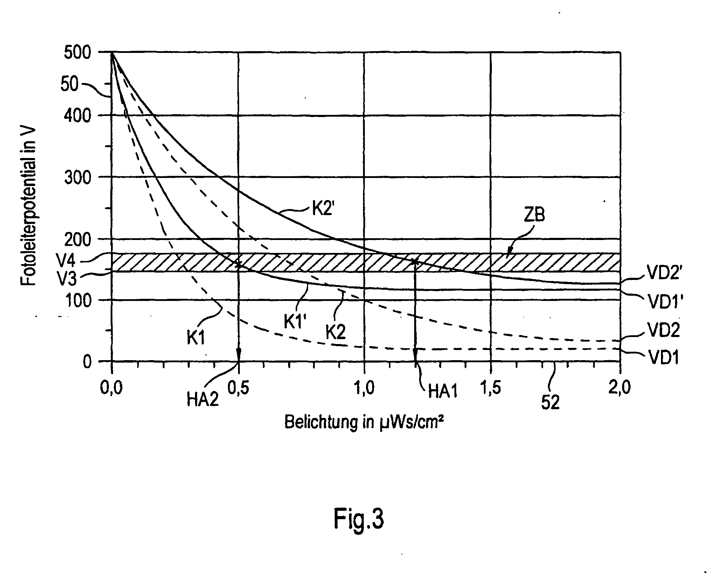

Figur 3 zeigt ein Potential-Belichtungsenergie-Diagramm mit einem schraffiert dargestellten Zielbereich ZB, der beim Ermitteln der angepaßten Belichtungsenergie HA1 bzw. HA2 verwendet wird. Auf der Ordinate 50 ist das Potential auf dem Fotoleiter in Volt dargestellt. Die Abszisse 52 zeigt die Belichtungsenergie in $\mu Ws/cm^2$, mit der der Fotoleiter belichtet wird.

Die angepaßte Belichtungsenergie HA1 bzw. HA2 wird ermittelt, indem ein Teilbereich des Fotoleiters gemäß einem vorgegebenen Raster belichtet wird. Das Verhältnis der Anzahl der belichteten Bildelemente im betrachteten Fotoleiterbereich zur Anzahl der nicht belichteten Bildelemente definiert einen Rasterfaktor FR, für den gilt: 0 < FR < 1. Typischerweise wird ein Rasterfaktor von 0,5 verwendet. Beispielsweise ergibt sich ein Rasterfaktor von 0,5, wenn in einem 5 mm x 5 mm großem Bereich die Bildelemente (Pixel) mit einer Größe von beispielsweise 42 $\mu m$ bei 600 dpi (dots per inch) Bildauflösung nach Art eines Schachbrettmusters belichtet bzw. nicht belichtet werden. Das Potential auf dem Bereich von 5 mm x 5 mm wird anschließend mit einem Potentialsensor erfaßt, der eine Erfassungsfläche von ebenfalls etwa 25 $mm^2$ hat.

Zum Festlegen der angepaßten Belichtungsenergie HA1 bzw. HA2 werden nicht die Kennlinien K1 bzw. K2 verwendet, sondern Kennlinien K1' bzw. K2'. Die Kennlinie K1' berücksichtigt den Einfluß des Rasterfaktors FR beim Belichten eines Fotoleiters mit der Kennlinie K1. Ebenso berücksichtigt die Kennlinie K2' den Einfluß des Rasterfaktors FR beim Belichten eines Fotoleiters mit der Kennlinie K2. Der Rasterfaktor FR führt zu einer Stauchung der Kennlinien K1 bzw. K2 in Richtung der Ordinate 50. Dadurch verschiebt sich das Entladepotential VD1 bzw. VD2 auf ein größeres Entladepotential VD1' bzw. VD2'. Das Verwenden der Kennlinien K1' bzw. K2' beim Festlegen der angepaßten Belichtungsenergie HA1 bzw. HA2 gewährleistet, daß nicht nur große Flächen sondern auch feine Bilddetails mit hoher Druckqualität gedruckt werden können.

Um die angepaßte Belichtungsenergie HA1 bzw. HA2 festzulegen, wird die aktuelle Kennlinie des Fotoleiters K1' bzw. K2', wie unten noch erläutert, durch eine Näherung bestimmt. Anschließend wird die angepaßte Belichtungsenergie HA1 bzw. HA2 so bestimmt, daß das zur Belichtungsenergie HA1 bzw. HA2 gehörende Potential zwischen Potentialen V3 und V4 liegt, welche den Zielbereich ZB begrenzen. Das dabei ausgeführte Verfahren wird ebenfalls im folgenden erläutert.

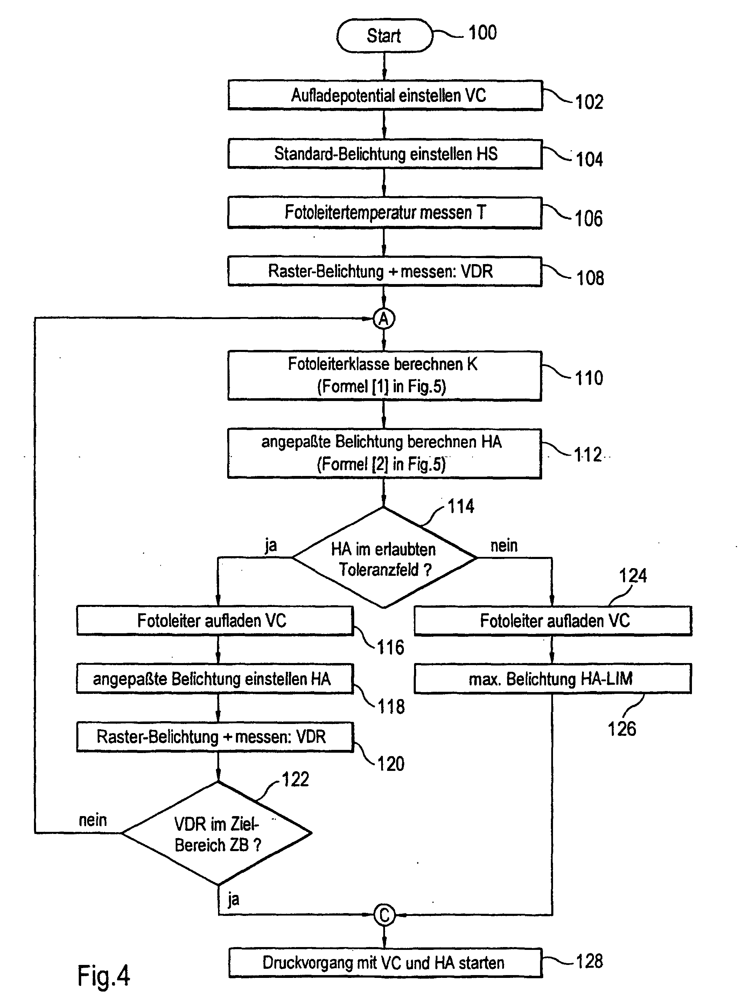

Figur 4 zeigt ein Ablaufdiagramm für die beim Ermitteln der angepaßten Belichtungsenergie HA auszuführenden Verfahrensschritte. Das Verfahren beginnt in einem Schritt 100. In einem Schritt 102 wird der Fotoleiter auf das Aufladepotential VC aufgeladen. Anschließend wird in einem Schritt 104 eine Standard-Belichtungsenergie HS von beispielsweise 1 $\mu Ws/cm^2$ eingestellt. In einem folgenden Verfahrensschritt 106 wird die Temperatur T des Fotoleiters erfaßt. Danach wird in einem Verfahrensschritt 108 der Fotoleiterbereich mit dem vorgegebenen Raster und der Standard-Belichtungsenergie HS belichtet. Anschließend wird mit dem Potentialsensor gemessen, welches integral Rasterpotential VDR auf dem Fotoleiterbereich anliegt.

In einem Schritt 110 wird danach eine Fotoleiterklasse K gemäß folgender Formel berechnet:

$$K(VDR, T, H, FR) := \frac{1}{T \cdot HS} \cdot \ell n\left[\frac{FR \cdot (VC - VLIM)}{VDR - (1 - FR)VC - FR \cdot VLIM}\right] \quad (1),$$

worin

| | |
|---|---|
| VC | das Aufladepotential des Fotoleiters in Volt, |
| VDR | das Entladepotential der Fotoleiterrasterfläche in Volt, |
| VLIM | das tiefste erreichbare Entladepotential in Volt, |
| HS | die Belichtungsenergie in $\mu Ws/cm^2$, |
| T | die Temperatur des Fotoleiters in $^\circ C$, |
| K | die Fotoleiterklasse in $cm^2/(\mu Ws^\circ C)$, |
| FR | der Rasterfaktor sind, und |
| $\ell n$ | der natürliche Logarithmus ist. |

In einem folgenden Schritt 112 wird die angepaßte Belichtungsenergie HA gemäß folgender Formel berechnet:

$$HA(VDR, K, T, FR) := \frac{1}{T \cdot K} \ell n\left[\frac{FR \cdot (VC - VLIM)}{VDR - (1 - FR) \cdot VC - FR \cdot VLIM}\right] (2),$$

wobei die verwendeten Größen denen aus der Formel (1) entsprechen. Die Formel (2) entsteht durch Umstellen der Formel (1) nach der Belichtungsenergie HS. Der durch die Formel (2) angegebene Zusammenhang ist eine erste Näherung für die Kennlinie K1' bzw. K2'.

In einem Schritt 114 wird geprüft, ob die angepaßte Belichtungsenergie HA in einem zugelassenen Bereich liegt. Ist dies der Fall, so wird der Fotoleiter in einem Schritt 116 erneut auf das vorgegebene Aufladepotential VC aufgeladen. Danach wird die gerade ermittelte angepaßte Belichtungsenergie HA eingestellt, vgl. Schritt 118. Mit dieser angepaßten Belichtungsenergie HA wird anschließend in einem Schritt 120 eine Rasterbelichtung durchgeführt, bei der der betrachtete Fotoleiterbereich wieder mit dem vorgegebenen Raster belichtet wird. Nach der Belichtung wird auf dem Fotoleiterbereich das Potential VDR gemessen.

In einem Schritt 122 wird geprüft, ob das gemessene Potential VDR im Zielbereich ZB liegt. Ist dies noch nicht der Fall, so wird das Verfahren im Schritt 110 fortgesetzt. Das Verfahren befindet sich nun in einer Schleife aus den Verfahrensschritten 110 bis 122, die in einem Iterationsprozeß durchlaufen wird. Dabei wird zum Berechnen der Fotoleiterklasse im Schritt 110 in der Formel (1) anstelle der Standard-Belichtungsenergie HS die jeweils zuletzt ermittelte angepaßte Belichtungsenergie HA verwendet. Die Schleife aus den Verfahrensschritten 110 bis 122 wird entweder im Schritt 114 oder im Schritt 122 verlassen. Liegt eine gemäß Formel (2) ermittelte angepaßte Belichtungsenergie HA außerhalb des Zulässigkeitsbereiches, so folgt unmittelbar nach dem Verfahrensschritt 114 ein Verfahrensschritt 124, in welchem der Fotoleiter auf das vorgegebene Potential VC aufgeladen wird. In einem folgenden Verfahrensschritt 126 wird als angepaßte Belichtungsenergie eine vorgegebene maximale Belichtungsenergie HA-LIM eingestellt. Danach wird der Druckvorgang in einem Schritt 128 begonnen, wobei das Aufladepotential VC und die Belichtungsenergie HA-LIM verwendet wird.

Wird die Schleife aus den Verfahrensschritten 110 bis 122 dagegen im Schritt 122 verlassen, weil das Entladepotential VDR innerhalb des Zielbereiches ZB liegt, so folgt unmittelbar nach dem Verfahrensschritt 122 der Verfahrensschritt 128. Der Druckvorgang wird mit dem Aufladepotential VC und mit der im Schritt 112 zuletzt berechneten Belichtungsenergie HA durchgeführt.

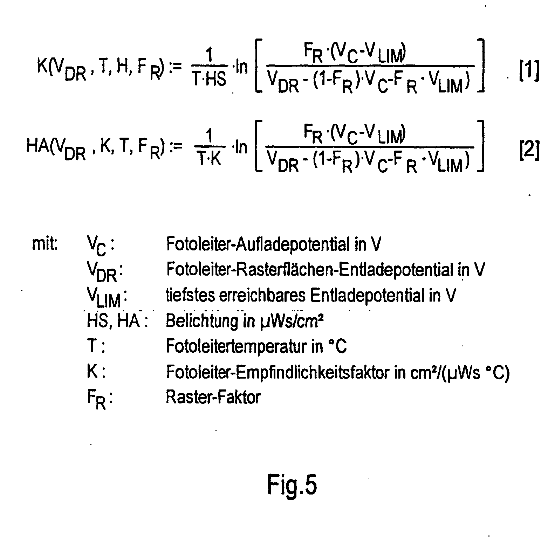

Figur 5 zeigt die Formeln (1) und (2) für die Fotoleiterklasse K und für die angepaßte Belichtungsenergie HA. Diese Formeln sind im Zusammenhang mit Figur 4 oben erläutert worden.

Der gesamte Vorgang zum Einregeln des Potentials im Zielbereich ZB, vgl. Figur 3, wird zweckmäßigerweise nach dem Einschalten des Druckers, nach Druckpausen im Bereitschaftsbetrieb, nach einem Fotoleiterwechsel und/oder während des laufenden Druckbetriebs in kontinuierlicher Folge durchgeführt. In einem anderen Ausführungsbeispiel wird die angepaßte Belichtungsenergie in geeigneten zeitlichen Abständen durchgeführt, beispielsweise alle 5 Minuten.

In einem weiteren Ausführungsbeispiel, bei dem der Druckbetrieb relativ selten unterbrochen wird, wird zwischen zwei Regelvorgängen gemäß Figur 4 eine Feinanpassung der Belichtungsenergie HA durchgeführt, indem die Temperatur T des Fotoleiters gemessen und anschließend nur gemäß der Formel (2) eine neue angepaßte Belichtungsenergie HA berechnet wird. So wird eine Interpolation ohne Rasterbelichtung und Potentialmessung erreicht.

Bei der Berechnung der angepaßten Belichtungsenergie HA werden entweder die angegebenen Formeln direkt verwendet oder das Verfahren wird durch Verwenden von Zuweisungstabellen vereinfacht. Die Zuweisungstabellen werden aus den Formeln (1) und (2) vor Beginn des Verfahrens zum Ermitteln der angepaßten Belichtungsenergie HA erzeugt und in einem Speicher des Druckers gespeichert.

Angewendet werden auch Verfahren ohne Iteration, bei denen die in Figur 4 gezeigten Verfahrensschritte 114 bis 126 fehlen. Die Schritte 114 bis 122 müssen nicht ausgeführt werden, wenn der elektrofotografische Druckvorgang eine hinreichende Grundstabilität hat und die Standardbelichtung HS geeignet gewählt wird.

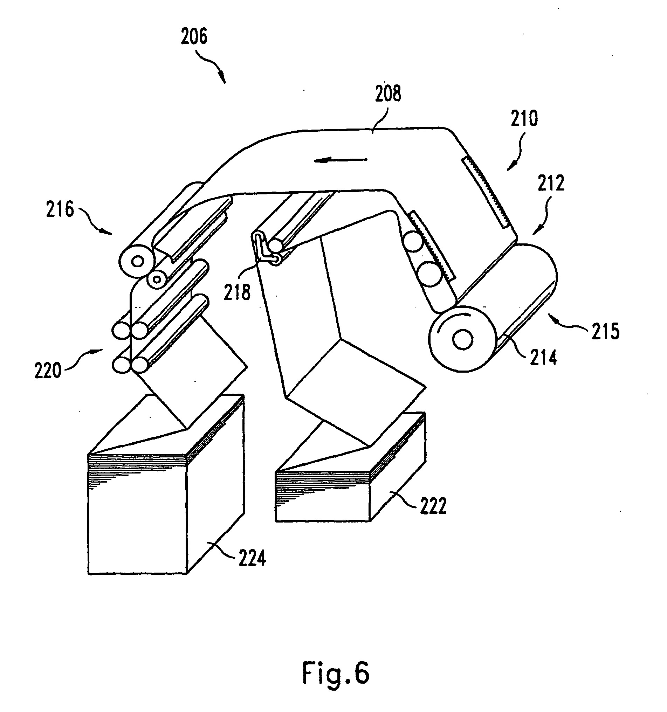

Figur 6 zeigt die Prinzipdarstellung eines Hochleistungs-Druckgeräts 206. Das Druckgerät 206 hat eine Transportvorrichtung 210, die nahe einer Umlenkstation 212 angeordnet ist und Endlos-Trägermaterial durch die Umdruckstation 212 fördert, in der das auf einer Fotoleitertrommel 214 mit Hilfe einer Belichtungsvorrichtung 215 aufgebrachte, mit Toner eingefärbte Ladungsbild mittels einer Coronaeinrichtung (nicht dargestellt) auf das Endlos-Trägermaterial übertragen wird. Anschließend wird das Endlos-Trägermaterial einer Fixierstation 216 zugeführt, in der das noch verwischbare Tonerbild mit Hilfe von Druck- und Temperatur mit dem Trägermaterial wischfest verbunden wird. In der durch einen Pfeil angedeuteten Transportrichtung gesehen vor der Umdruckstation 212 ist eine erste Umlenkeinheit 218 angeordnet, die das Trägermaterial der Umdruckstation 212 zuleitet und entsprechend der ausgewählten Druckart das Trägermaterial wenden oder auch nur seitlich versetzen kann. Eine zweite Umlenkeinheit 220 ist in Transportrichtung gesehen nach der Fixierstation 216 angeordnet. Diese zweite Umlenkeinheit 220 stapelt das bedruckte Trägermaterial und kann, gleichfalls abhängig von der gewählten Druckart, das Material außerdem der ersten Umlenkeinheit 218 zuführen.

Figur 6 zeigt den Drucker 206 in einer ersten Druckart, dem Simplexbetrieb, bei dem ein Bahnabschnitt 208 des Endlos-Trägermaterials von einem Stapel 222 durch die erste Umlenkeinheit 218 der Druckeinheit 212 zugeführt wird. Nach dem Drukken transportiert die Transportvorrichtung 210 den Bahnabschnitt 208 in Richtung der Fixierstation 216, in der das Tonerbild fest mit dem Trägermaterial verbunden wird. Anschließend stapelt die zweite Umlenkeinheit 220 den Bahnabschnitt 208 auf einem zweiten Stapel 224 auf.

Wird in einer Ausgestaltung zum Belichten ein Multilevel-Zeichengenerator verwendet, so kommen die durch das erfindungsgemäße Verfahren erzielten Vorteile deshalb besonders zum Tragen, weil gerade bei einer Vielzahl von Grauwerten bzw. Farbwerten durch das erfindungsgemäße Verfahren die Druckqualität entscheidend erhöht werden kann. Ein Multilevel-Zeichengenerator ist beispielsweise in der US-Patentschrift 5,767,888 erläutert.

Bezugszeichenliste

| | |
|---|---|
| 10 | Ordinate, Potential |
| 12 | Abszisse, Zeit t |
| V1 | Aufladepotential |
| VC, VC' | Aufladepotential |
| VD1, VD2 | Entladepotential |
| 14 | gestrichelte Linie |
| VLIM | tiefstes erreichbares Entladepotential |
| 20 | Ordinate, Potential V |
| 22 | Abszisse, Belichtungsenergie |
| 30 | Ordinate, Belichtungsenergie |
| 32 | Abszisse, Ort in Pixeln |
| LA, LB | Lichtverteilung |
| LED | Light Emitting Diode |
| 34 | Bezugspixel |
| 40 | Ordinate, Potential V |
| 42 | Abszisse, Ort in Pixeln |
| P1A, P2A, P2B | Potentialverteilung |
| HA1, HA2 | angepaßte Belichtungsenergie |
| ZB | Zielbereich |
| 50 | Ordinate, Potential V |
| 52 | Abszisse, Belichtungsenergie |

| FR | Rasterfaktor |
|---|---|
| K1', K2' | veränderte Kennlinie |
| VD1', VD2' | verändertes Entladepotential |
| HS | Standard-Belichtungsenergie |
| T | Temperatur |
| VDR | Rasterpotential |
| K | Fotoleiterklasse |
| 100 | Start |
| 102 | Aufladepotential einstellen VC |
| 104 | Standard-Belichtung einstellen HS |
| 106 | Fotoleitertemperatur messen T |
| 108 | Raster-Belichtung + Messen |
| 110 | Fotoleiterklasse berechnen K |
| 112 | angepaßte Belichtung berechnen HA |
| 114 | im erlaubten Toleranzfeld? |
| 116 | Fotoleiter aufladen VC |
| 118 | angepaßte Belichtung einstellen HA |
| 120 | Raster-Belichtung + messen: VDR |
| 122 | im Zielbereich ZB? |
| 124 | Fotoleiter aufladen VC |
| 126 | maximale Belichtung HA-LIM |
| 128 | Druckvorgang mit VC und HA starten |
| 206 | Druckgerät |
| 208 | Bahnabschnitt |
| 210 | Transportvorrichtung |
| 212 | Umdruckstation |
| 214 | Fotoleitertrommel |
| 115 | Belichtungsvorrichtung |
| 216 | Fixierstation |
| 218, 220 | Umlenkeinheit |
| 222, 224 | Stapel |

**Patentansprüche**

1. Verfahren zum Betreiben eines elektrofotografischen Druck- oder Kopiergeräts (206),
bei dem ein erster Teil der Bildelemente auf einem aufgeladenen Fotoleiterbereich mit einer vorgegebenen Belichtungsenergie HS, HA durch eine Belichtungsvorrichtung (215) belichtet wird (Schritt 108),
der andere Teil der Bildelemente auf dem Fotoleiterbereich nicht belichtet wird,
aus dem Verhältnis der Anzahl der Bildelemente des ersten Teils zur Anzahl der Bildelemente des zweiten Teils ein Rasterparameter FR ermittelt wird,
das elektrische Potential VDR des Fotoleiterbereichs nach dem Belichten erfaßt wird (Schritt 108),
und bei dem an Hand einer Näherung (1, 2) für die aktuelle Kennlinie des Fotoleiters (214) unter Berücksichtigung des ermittelten Rasterparamters FR und des erfaßten Potentials VDR für den anschließenden Druckvorgang eine angepaßte Belichtungsenergie HA ermittelt wird (Schritt 112), die dem Einfluß einer Abweichung der aktuellen Kennlinie (K1, K2; K1', K2') des Fotoleiters von einer Sollkennlinie auf den Druckvorgang entgegenwirkt.

2. Verfahren nach Anspruch 1, **dadurch gekennzeichnet, daß** die Bildelemente des ersten Teils und auch die Bildelemente des zweiten Teils auf dem Fotoleiterbereich etwa gleichmäßig verteilt sind, vorzugsweise nach Art eines Rasters oder streifenförmig.

3. Verfahren nach einem der vorhergehenden Ansprüche, **dadurch gekennzeichnet, daß** der Rasterfaktor FR etwa 0,5 beträgt.

4. Verfahren nach einem der vorhergehenden Ansprüche, **dadurch gekennzeichnet, daß** die angepaßte Belichtungsenergie HA gemäß der folgenden Formel ermittelt wird:

$$HA(VDR,K,T,FR) := \frac{1}{T \cdot K} \, \ell n \left[ \frac{FR \cdot (VC - VLIM)}{VDR - (1 - FR) \cdot VC - FR \cdot VLIM} \right] \quad (2),$$

worin

VC      das Aufladepotential des Fotoleiters in Volt,
VDR      das Entladepotential der Fotoleiterrasterfläche in Volt,
VLIM      das tiefste erreichbare Entladepotential in Volt,
HA      die Belichtungsenergie in $\mu Ws/cm^2$,
T      die Temperatur des Fotoleiters in $°C$,
K      die Fotoleiterklasse in $cm^2/(\mu Ws°C)$,
FR      der Rasterparameter sind, und
$\ell$n      der natürliche Logarithmus ist.

**5.** Verfahren nach Anspruch 4, **dadurch gekennzeichnet, daß** der Empfindlichkeitsfaktor K gemäß folgender Formel ermittelt wird:

$$K(VDR,T,H,FR) := \frac{1}{T \cdot HS} \cdot \ell n \left[ \frac{FR \cdot (VC - VLIM)}{VDR - (1 - FR)VC - FR \cdot VLIM} \right] \quad (1),$$

worin

VC      das Aufladepotential des Fotoleiters in Volt,
VDR      das Entladepotential der Fotoleiterrasterfläche in Volt,
VLIM      das tiefste erreichbare Entladepotential in Volt,
HS      die Standard-Belichtungsenergie in $\mu Ws/cm^2$,
T      die Temperatur des Fotoleiters in $°C$,
K      die Fotoleiterklasse in $cm^2/(\mu Ws°C)$, und
FR      der Rasterfaktor ist.

**6.** Verfahren nach Anspruch 5, **dadurch gekennzeichnet, daß** zur Bestimmung der angepaßten Belichtungsenergie eine Iteration durchgeführt wird (Schritte 116 bis 122), wobei jedoch anstelle der Standard-Belichtungsenergie HS die zuletzt ermittelte angepaßte Belichtungsenergie HA verwendet wird.

**7.** Verfahren nach einem der vorhergehenden Ansprüche, **dadurch gekennzeichnet, daß** bei der Potentialmessung das mittlere Potential auf dem Fotoleiterbereich erfaßt wird.

**8.** Verfahren nach einem der vorhergehenden Ansprüche, **dadurch gekennzeichnet, daß** zum Belichten ein Multilevel-Zeichengenerator verwendet wird.

**9.** Elektrofotografisches Druck- oder Kopiergerät (106),
mit einer Aufladevorrichtung zum Aufladen eines Fotoleiters (214),
einer Belichtungsvorrichtung (215) zum bildmäßigen Belichten des Fotoleiters (214), und
mit einer Steuereinheit, die so ausgebildet ist, daß sie vor Beginn des Druckvorgangs Steuerfunktionen ausführt, durch die
ein Teil der Bildelemente auf einem aufgeladenen Fotoleiterbereich mit einer vorgegebenen Belichtungsenergie (HS, HA) durch die Belichtungsvorrichtung (215) belichtet wird,
der andere Teil der Bildelemente auf dem Fotoleiterbereich mit einer geringeren Belichtungsenergie oder nicht belichtet wird,
aus dem Verhältnis der Anzahl der Bildelemente des ersten Teils zur Anzahl der Bildelemente des zweiten Teils ein Rasterparameter (FR) ermittelt wird, das elektrische Potential (VDR) des Fotoleiterbereichs nach dem Belichten erfaßt wird, und durch die an Hand einer Näherung (1, 2) für die aktuelle Kennlinie des Fotoleiters (214) unter Berücksichtigung des ermittelten Rasterparameters (FR) und des erfaßten Potentials (VDR) für den Druckvorgang eine angepaßte Belichtungsenergie (HA) ermittelt wird, die den Einfluß von Abweichungen der aktuellen Kennlinie (K1, K2; K1', K2') des Fotoleiters von einer Sollkennlinie auf den Druckvorgang entgegenwirkt.

**10.** Druck- oder Kopiergerät (106) nach Anspruch 9, **dadurch gekennzeichnet, daß** die Belichtungsvorrichtung (115) einen Multilevel-Zeichengenerator enthält.

**Claims**

**1.** Method for the operation of an electrophotographic printer or copier device (206), wherein a first part of the image elements on a charged photoconductor region is exposed with a predetermined exposure energy HS, HA by an exposure device (215) (step 108), the other part of the image elements on the photoconductor region is not exposed, from the ratio of the number of image elements of the first part to the number of image elements of the second part a raster parameter FR is defined, the electrical potential VDR of the photoconductor region is acquired after the exposure (step 108), and wherein an adapted exposure energy HA is determined (step 112) for the following printing event on the basis of an approximation (1, 2) for the current characteristic of the photoconductor (214), taking the determined raster parameter FR and the acquired potential VDR into account, said exposure energy opposing the influence of a deviation of the current characteristic (K1, K2; K1', K2') of the photoconductor from a desired characteristic on the printing event.

**2.** The method according to claim 1, **characterized in that** the image elements of the first part and the image elements of the second part as well are approximately uniformly distributed on the photoconductor region, preferably in the fashion of a grid or stripe-shaped.

**3.** The method according to one of the preceding claims, **characterized in that** the raster factor FR amounts to approximately 0.5.

**4.** The method according to one of the preceding claims, **characterized in that** the adapted exposure energy HA is determined according to the following formula:

$$HA(VDR, K, T, FR) := \frac{1}{T \cdot K} \ell n \left[ \frac{FR \cdot (VC - VLIM)}{VDR - (1 - FR) \cdot VC - FR \cdot VLIM} \right] \quad (2),$$

wherein

VC    is the charge potential of the photoconductor in volts,
VDR    is the discharge potential of the photoconductor raster area in volts,
VLIM    is the lowest obtainable discharge potential in volts,
HA    is the exposure energy in $\mu Ws/cm^2$,
T    is the temperature of the photoconductor in $^\circ C$,
K    is the photoconductor class in $cm^2/(\mu Ws^\circ C)$,
FR    is the raster parameter, and
$\ell n$    ist the natural logarithm.

**5.** The method according to claim 4, **characterized in that** the sensitivity factor K is determined according to the following formula:

$$K(VDR,T,H,FR) := \frac{1}{T \cdot HS} \ell n \left[ \frac{FR \cdot (VC - VLIM)}{VDR - (1 - FR)VC - FR \cdot VLIM} \right] \qquad (1),$$

wherein

VC     is the charge potential of the photoconductor in volts,
VDR    is the discharge potential of the photoconductor raster area in volts,
VLIM   is the lowest obtainable discharge potential in volts,
HS     is the standard exposure energy in $\mu Ws/cm^2$,
T      is the temperature of the photoconductor in $^\circ C$,
K      is the photoconductor class in $cm^2/(\mu Ws ^\circ C)$, and
FR     is the raster factor.

6. The method according to claim 5, **characterized in that** an iteration is implemented (steps 116 to 122) for the determination of the adapted exposure energy, however, the most recently determined adapted exposure energy HA being employed instead of the standard exposure energy HS.

7. The method according to one of the preceding claims, **characterized in that** the average potential on the photoconductor region is acquired in the measurement of potential.

8. The method according to one of the preceding claims, **characterized in that** a multi-level character generator is employed for the exposure.

9. Electrophotographic printer or copier device (106),
comprising a charging device for charging a photoconductor (214),
an exposure device (215) for the image-wise exposure of the photoconductor (214), and
comprising a control unit which is designed such that before the beginning of the printing event it implements control functions by means of which
one part of the image elements on a charged photoconductor region is exposed with a predetermined exposure energy (HS, HA) by the exposure device (215),
the other part of the image elements on the photoconductor region is exposed with a lower exposure energy or is not exposed,
from the ratio of the number of image elements of the first part to the number of image elements of the second part a raster parameter (FR) is determined,
the electrical potential (VDR) of the photoconductor region is acquired after the exposure,
and by means of which an adapted exposure energy (HA) is determined for the printing event on the basis of an approximation (1, 2) for the current characteristic of the photoconductor (214), taking the determined raster parameter (FR) and the acquired potential (VDR) into account, said exposure energy opposing the influence of deviations of the current characteristic (K1, K2; K1', K2') of the photoconductor from a desired characteristic on the printing event.

10. The printer or copier device (106) according to claim 9, **characterized in that** the exposure device (115) contains a multi-level character generator.

**Revendications**

1. Procédé pour faire fonctionner un appareil d'impression ou un copieur électrophotographique (206), dans lequel :

une première partie des éléments d'image situés sur une zone photoconductrice chargée est éclairée par un dispositif d'éclairement (215) avec une énergie d'éclairement prédéterminée HS, HA (Etape 108),
l'autre partie des éléments d'image situés sur la zone photoconductrice n'est pas éclairée,
un paramètre de tramage FR est déterminé à partir du rapport du nombre d'éléments d'image de la première partie sur le nombre d'éléments d'image de la deuxième partie,
le potentiel électrique VDR de la région photoconductrice est mesuré après l'éclairement (Etape 108), et

à partir d'une approximation (1, 2) de la caractéristique actuelle du photoconducteur (214), en tenant compte du paramètre de tramage FR déterminé et du potentiel VDR mesuré, on détermine pour le processus d'impression suivant une énergie d'éclairement adaptée HA (Etape 112) qui s'oppose à ce qu'un écart entre la caractéristique actuelle (K1, K2 ; K1', K2') du photoconducteur et une caractéristique de consigne influe sur le processus d'impression.

2. Procédé selon la revendication 1, **caractérisé en ce que** les éléments d'image de la première partie ainsi que les éléments d'image de la deuxième partie sont répartis de façon à peu près uniforme sur la région photoconductrice, avantageusement à la manière d'une trame ou d'une bande.

3. Procédé selon l'une des revendications précédentes, **caractérisé en ce que** le facteur de tramage FR est de 0,5 environ.

4. Procédé selon l'une des revendications précédentes, **caractérisé en ce que** l'énergie d'éclairement adaptée HA est déterminée conformément à la formule suivante :

$$HA(VDR,K,T,FR) = \frac{1}{T \cdot K} Ln\left[\frac{FR(VC-VLIM)}{VDR-(1-FR) \cdot VC - FR \cdot VLIM}\right]$$

$$(2)$$

où

VC est le potentiel de charge du photoconducteur en volts,
VDR est le potentiel de décharge de la surface tramée du photoconducteur en volts,
VLIM est le potentiel de décharge, le plus faible pouvant être obtenu, en volts,
HA est l'énergie d'éclairement en $\mu$Ws/cm$^2$,
T est la température du photoconducteur en °C,
K est la classe du photoconducteur en cm$^2$/($\mu$Ws°C),
FR est le paramètre de tramage, et
Ln est le logarithme népérien.

5. Procédé selon la revendication 4, **caractérisé en ce que** le facteur de sensibilité K est déterminé conformément à la formule suivante :

$$K(VDR,T,H,FR) = \frac{1}{T \cdot HS} Ln\left[\frac{FR(VC-VLIM)}{VDR-(1-FR) \cdot VC - FR \cdot VLIM}\right] \qquad (1)$$

où

VC est le potentiel de charge du photoconducteur en volts,
VDR est le potentiel de décharge de la surface tramée du photoconducteur en volts,
VLIM est le potentiel de décharge, le plus faible pouvant être obtenu, en volts,
HS est l'énergie d'éclairement standard en $\mu$Ws/cm$^2$,
T est la température du photoconducteur en °C,
K est la classe du photoconducteur en cm$^2$/($\mu$Ws°C), et
FR est le paramètre de tramage.

6. Procédé selon la revendication 5, **caractérisé en ce que** l'on effectue une itération pour déterminer l'énergie d'éclairement adaptée (Etapes 116 à 122), l'énergie d'éclairement adaptée finalement déterminée HA étant cependant utilisée à la place de l'énergie d'éclairement standard HS.

7. Procédé selon l'une des revendications précédentes, **caractérisé en ce que** l'on détermine, lors de la mesure du potentiel, le potentiel moyen sur la zone photoconductrice.

8. Procédé selon l'une des revendications précédentes, **caractérisé en ce qu'**un générateur de caractères à niveaux multiples est utilisé pour réaliser l'éclairement.

9. Appareil d'impression ou copieur électrophotographique (106), comportant
   un dispositif de charge destiné à charger un photoconducteur (214),
   un dispositif d'éclairement (215) destiné à éclairer le photoconducteur (214) conformément à une image, et
   une unité de commande qui est conformée de telle sorte qu' elle met en oeuvre, avant le processus d'impression, des fonctions de commande permettant :

   d'éclairer une partie des éléments d'image situés sur une zone photoconductrice chargée avec une énergie d'éclairement prédéterminée (HS, HA) au moyen du dispositif d'éclairement (215),
   de ne pas éclairer ou bien d'éclairer avec une énergie d'éclairement plus faible l'autre partie des éléments d'image situés sur la zone photoconductrice,
   de déterminer un paramètre de tramage (FR) à partir du rapport du nombre des éléments d'image de la première partie sur le nombre des éléments d'image de la deuxième partie,
   de mesurer après l'éclairement le potentiel électrique (VDR) de la zone photoconductrice, et
   de déterminer pour le processus d'impression, à partir d'une approximation (1, 2) de la caractéristique actuelle du photoconducteur (214), en tenant compte du paramètre de tramage (FR) déterminé et du potentiel (VDR) mesuré, une énergie d'éclairement adaptée (HA) qui s'oppose à ce qu'un écart entre la caractéristique actuelle du photoconducteur (K1, K2 ; K1', K2') et une caractéristique de consigne influe sur le processus d'impression.

10. Appareil d'impression ou copieur (106) selon la revendication 9, **caractérisé en ce que** le dispositif d'éclairement (115) contient un générateur de caractères à niveaux multiples.

Fig.1

Fig.2

Fig.3

Start ⟋ 100

Aufladepotential einstellen VC ⟋ 102

Standard-Belichtung einstellen HS ⟋ 104

Fotoleitertemperatur messen T ⟋ 106

Raster-Belichtung + messen: VDR ⟋ 108

Ⓐ

Fotoleiterklasse berechnen K
(Formel [1] in Fig.5) ⟋ 110

angepaßte Belichtung berechnen HA
(Formel [2] in Fig.5) ⟋ 112

114

ja ← HA im erlaubten
Toleranzfeld ? → nein

124

Fotoleiter aufladen VC ⟋ 116

Fotoleiter aufladen VC

angepaßte Belichtung einstellen HA ⟋ 118

max. Belichtung HA-LIM

126

Raster-Belichtung + messen: VDR ⟋ 120

122

nein ← VDR im Ziel-
Bereich ZB ?

ja

Ⓒ

Druckvorgang mit VC und HA starten ⟋ 128

Fig.4

$$K(V_{DR}, T, H, F_R) := \frac{1}{T \cdot HS} \cdot \ln \left[ \frac{F_R \cdot (V_C - V_{LIM})}{V_{DR} - (1 - F_R) \cdot V_C - F_R \cdot V_{LIM}} \right] \quad [1]$$

$$HA(V_{DR}, K, T, F_R) := \frac{1}{T \cdot K} \cdot \ln \left[ \frac{F_R \cdot (V_C - V_{LIM})}{V_{DR} - (1 - F_R) \cdot V_C - F_R \cdot V_{LIM}} \right] \quad [2]$$

mit:

$V_C$ :    Fotoleiter-Aufladepotential in V

$V_{DR}$ :    Fotoleiter-Rasterflächen-Entladepotential in V

$V_{LIM}$ :    tiefstes erreichbares Entladepotential in V

HS, HA :    Belichtung in µWs/cm²

T :    Fotoleitertemperatur in °C

K :    Fotoleiter-Empfindlichkeitsfaktor in cm²/(µWs °C)

$F_R$ :    Raster-Faktor

## Fig.5

Fig.6